# EUROPÄISCHE PATENTSCHRIFT

(11) **EP 0 692 353 B1**
(45) Veröffentlichungstag und Bekanntmachung des Hinweises auf die Patenterteilung: **08.09.1999**
(21) Anmeldenummer: 95109786.4
(22) Anmeldetag: 23.06.1995
(51) Int. Cl.: B29B 7/74

(54) **Verfahren zum kontinuierlichen Dispergieren von feinteiligen Feststoffen in einer Flüssigkeit**
Method for continuously dispersing fine particles in a liquid
Procédé pour disperser en continue des solides fins dans un fluide

(30) Priorität: 06.07.1994 DE 4423649; 06.10.1994 DE 4435717
(43) Veröffentlichungstag der Anmeldung: 17.01.1996
(73) Patentinhaber: Hennecke GmbH, 51379 Leverkusen (DE)
(72) Erfinder: Sulzbach, Hans-Michael, F-53639 Königswinter (DE); Raffel, Reiner, D-53721 Siegburg (DE); Althausen, Ferdinand, D-53819 Neunkirchen-Seelscheid 1 (DE); Wirth, Jürgen, D-51147 Köln (DE)
(74) Vertreter: Drope, Rüdiger, Dr.

(56) Entgegenhaltungen:
- EP-A- 0 373 409
- DE-A- 3 507 202
- FR-A- 2 323 517

## Beschreibung

Die vorliegende Erfindung betrifft ein Verfahren zum kontinuierlichen Dispergieren von feinteiligen Feststoffen in einer Flüssigkeit, insbesondere einer flüssigen Komponente eines Zweikomponenten-Reaktivkunststoffs, z.B. eines Polykondensations-oder Polyadditionssystems, insbesondere in der Polyolkomponente eines Polyurethansystems.

Typischerweise werden bei Zweikomponenten-Kunststoffen die beiden miteinander reaktionsfähigen Kunststoff-Komponenten in flüssiger Form in definierten Mengenverhältnissen in einem Mischkopf vermischt und anschließend gegebenenfalls nach Einbringen in eine Form zur Reaktion gebracht, wobei gegebenenfalls zur Beschleunigung der Reaktionen Katalysatoren bzw. Wärme eingesetzt werden kann. Speziell im Falle von Polyurethankunststoffen, z.B. Polyurethanschaumstoffen, besteht die eine Komponente aus Isocyanat bzw. einem Isocyanatprepolymer und die andere Komponente aus einem Polyol, wobei die beiden Komponenten in definiertem Verhältnis in den Mischkopf dosiert werden.

Zur Beeinflussung des Eigenschaftsprofils solcher Zweikomponenten-Kunststoffe werden diese häufig mit anorganischen, z.B. mineralischen, oder organischen Füllstoffen versehen.

Gemäß DE-C 38 41 671 wird vorgeschlagen, den Füllstoff mit einer der Reaktivkomponenten des Zweikomponentensystems in einem Vormischer zu vermischen und die füllstoffhaltige Komponente dem Mischkopf zuzuführen. Dabei erfolgt die Zuführung des Füllstoffs zum Vormischer mittels einer Schnecke unter Verdichtung, wobei die Dosierung des Füllstoffs dadurch erfolgt, daß die Umdrehungszahl der Schnecke in Abhängigkeit vom Druck in dem Vormischer geregelt wird.

Gemäß EP-A 431 388 wird bei einem Verfahren gemäß DE-C 38 41 671 zur Vermeidung eines unerwünschten Lufteintrages in den Vormischer vorgeschlagen, den Mantel der Verdichtungsschnecke am Auslaßende zum Vormischer als porösen Mikrofilter aus porösem Sintermetall oder Kunststoff auszubilden und mit einem ringförmigen Absaugkanal zu umgeben, um die Luft aus dem verdichteten Füllstoff abzusaugen. Nachteilig bei diesem Verfahren ist, daß bei Einsatz feinteiliger Füllstoffe bzw. bei Einsatz von Füllstoffen mit einem hohen Gehalt sehr feiner Partikel das Mikrofilter innerhalb relativ kurzer Zeiträume verstopft wird und ausgewechselt werden muß. Der vorliegenden Erfindung liegt nun die Aufgabe zugrunde, die genannten Nachteile zu vermeiden. Insbesondere war die Aufgabe zu lösen, unter Erhaltung der Dosiergenauigkeit der Dosierschnecke für die feinteiligen Feststoffe (Füllstoffe) durch Regelung des Druckes im Vormischer über die Dosiergeschwindigkeit der Schnecke die Zufuhr von in den Zwischenräumen zwischen den Feststoffteilchen befindlicher unerwünschter Luft in den Vormischer zu vermeiden. Die Aufgabe wird durch die vorliegende Erfindung gelöst.

Gegenstand der vorliegenden Erfindung ist ein Verfahren zum kontinuierlichen Dispergieren von feinteiligen Feststoffen in einer Flüssigkeit mittels eines Mischaggregates, wobei ein definierter Flüssigkeitsstrom kontinuierlich dem Mischaggregat zugeführt wird und die feinteiligen Feststoffe mittels einer Schnecke kontinuierlich unter Verdichtung dem Mischaggregat zugeführt werden, die Dosierung der Feststoffe durch Regelung der Fördergeschwindigkeit der Schnecke in Abhängigkeit des im Mischaggregat herrschenden Druckes geregelt wird und die Feststoffe vor ihrer Einleitung in das Mischaggregat entgast werden, das dadurch gekennzeichnet ist, daß der Schnecke ein Vakuumzwischensilo vorgeschaltet wird, aus dem die Schnecke fördert, und in dem Zwischensilo die Füllstandshöhe im wesentlichen konstant gehalten wird. Die Überdeckung der Schnecke im Zwischensilo mit feinteiligen Feststoffen beträgt vorzugsweise mindestens das 2- bis 3-fache des Schneckendurchmessers, maximal das 7- bis 10-fache.

Erfindungsgemäß ist in dem Vakuumzwischensilo eine Füllstandssonde vorgesehen, mittels derer die Beschickung des Zwischensilos mit feinteiligen Feststoffen geregelt wird. Vorzugsweise erfolgt die Beschickung des Zwischensilos mittels einer Ladeschnecke oder einer Zellradschleuse aus einem Vorratssilo. Dabei fördert die Ladeschnecke bzw. die Zellradschleuse vorzugsweise in Höhe des geregelten Füllstandes in das Zwischensilo, so daß ein Rieseln bzw. Stauben des feinteiligen Füllstoffs im Zwischensilo vermieden wird. Mittels einer Vakuumpumpe wird vom Kopf des Zwischensilos Luft abgesaugt, so daß im Zwischensilo ein Unterdruck herrscht. Der Unterdruck im Zwischensilo wird so gewählt und durch die Vakuumpumpe gesteuert, daß die zwischen den Feststoffteilchen verbliebene Luftmenge tolerierbar ist, z.B. im Vormischer vollständig in der Flüssigkeit gelöst werden kann. Dabei kann der im Zwischensilo herrschende Druck 0,01 bis 0,8 bar (absolut), vorzugsweise 0,1 bis 0,3 bar betragen.

Das Zwischensilo wird vorzugsweise so dimensioniert, daß eine Verweilzeit der feinteiligen Feststoffe im Zwischensilo von 2 bis 10 Minuten, vorzugsweise mindestens 3 bis 5 Minuten resultiert.

Das erfindungsgemäße Verfahren ist insbesondere geeignet für die Dispergierung von feinteiligen Feststoffen in Flüssigkeiten, die die Feststoffe nur relativ schwer benetzen bzw. höher-viskosen Flüssigkeiten mit Viskositäten von z.B. 300 bis 3000 mPa.s, da es bei solchen Dispersionen besonders schwierig ist, z.B. nach der Vermischung von Feststoff und Flüssigkeit noch störende Gasanteile zu entfernen.

Bevorzugt wird als Flüssigkeit die Binder-Komponente eines Zweikomponenten-Reaktivkunststoffs eingesetzt, insbesondere die Polyolkomponente eines Polyurethan-Reaktivsystems. Als Feststoffe können die in Zweikomponentensystemen üblicherweise verwendeten organischen oder anorganischen Füllstoffe eingesetzt werden, z.B. gemahlene Glasfasern, Hohlglaskugeln, feinteiliges Siliciumdioxid, gemahlene Kunststoffabfälle, Melaminharze. Insbesondere ist das erfindungsgemäße Verfahren für Füllstoffe mit einem erheblichen Anteil an Teilchen mit Teilchengrößen unter 50 µ, insbesondere unter 10 µ geeignet. So eignet sich das Verfahren in hervorragender Weise für die Dispergierung von Melaminharzen mit mittleren Teilchengrößen von 30 bis 80 µ in der Polyolkomponente eines Polyurethan-Reaktivsystems.

Insbesondere ist das erfindungsgemäße kontinuierliche Dispergierverfahren für die kontinuierliche Herstellung von füllstoffbeladenen Polyurethankunststoffen im Durchlaufverfahren geeignet, indem die im Vormischer erhaltene Dispersion unmittelbar einem Mischkopf zur Vermischung der füllstoffhaltigen Polyolkomponente mit der Isocyanatkomponente zugeführt wird.

Gegenstand der vorliegenden Erfindung ist auch eine Vorrichtung zur kontinuierlichen Dispergierung von feinteiligen Feststoffen in einer Flüssigkeit im Durchlaufverfahren, wobei die feinteiligen Feststoffe vor der Dispergierung entgast werden, enthaltend ein Mischaggregat, Mittel zur Zufuhr eines konstanten Flüssigkeitsstromes zum Mischaggregat, einem Zwischensilo für die feinteiligen Feststoffe, Mitteln zur Aufrechterhaltung eines Unterdruckes im Zwischensilo, einer Schnecke zur Förderung der feinteiligen Feststoffe aus dem Zwischensilo in das Mischaggregat, Mittel zur Druckmessung in dem Mischaggregat, Mittel zur Steuerung der Förderleistung der Schnecke in Abhängigkeit von dem Druck im Mischaggregat, Mittel zur Förderung von feinteiligen Feststoffen in das Zwischensilo, sowie Mittel zur Regelung der Feststoffzufuhr zum Zwischensilo in Abhängigkeit von einem vorgegebenen Soll-Füllstand des Zwischensilos.

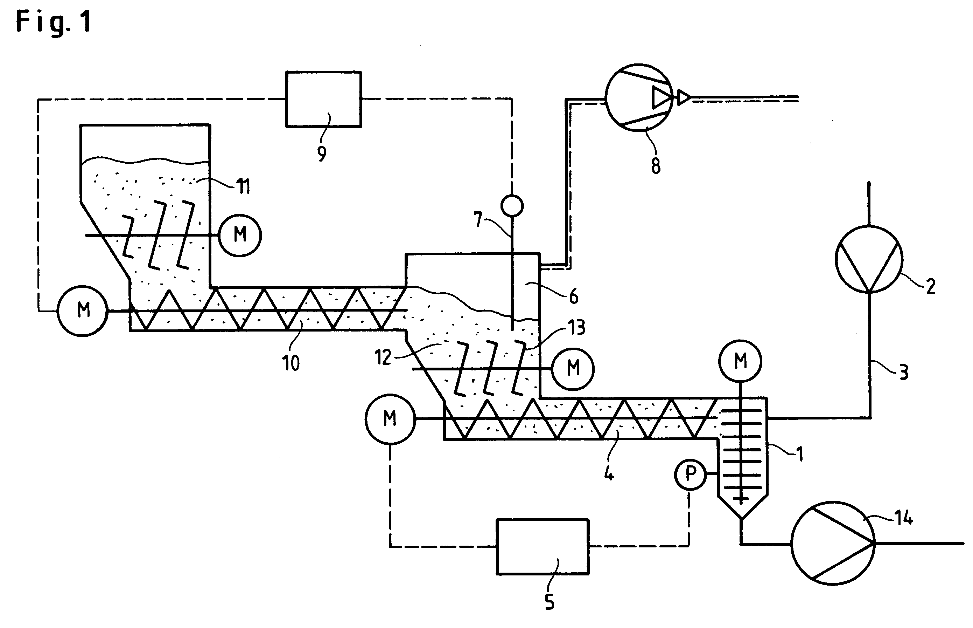

Die Erfindung wird nachfolgend anhand der beigefügten Fig. 1 näher erläutert: Dem Mischaggregat 1 wird mittels Dosierpumpe 2 über Leitung 3 ein konstanter Flüssigkeitsstrom, z.B. die Polyolkomponente eines Polyurethan-Reaktivsystems zudosiert. Gleichzeitig wird in das Mischaggregat 1 mittels Schnecke 4 entgaster feinteiliger Füllstoff zudosiert. Die Dosierung erfolgt, indem der mittels Druckmeßgerät P in dem Mischaggregat 1 gemessene Druck konstant gehalten wird, indem über das Regelgerät 5 die Antriebsleistung des Motors M der Schnecke 4 geregelt wird. Die Schnecke 4 fördert aus dem Zwischensilo 6. Das Zwischensilo 6 wird aus dem Vorratssilo 11 mittels Schnecke 10 beschickt. Dabei wird die Antriebsleistung des Motors M der Schnecke 10 mittels Regelgerät 9 in Abhängigkeit vom Signal der Füllstandssonde 7 derart geregelt, daß im Zwischensilo 6 der Füllstand etwa konstant gehalten wird. Ferner wird der Gasraum über dem Füllstand des Zwischensilos 6 mittels Vakuumpumpe 8 kontinuierlich entgast. Ferner kann die Füllung 12 im Zwischensilo 6 mittels Auflockerer 13 aufgelockert werden. Mittels Pumpe 14 wird die Polyol/Feststoff-Dispersion direkt einem nicht gezeichneten Mischkopf zur Vermischung mit der Isocyanatkomponente zugeführt.

## Patentansprüche

1. Verfahren zum kontinuierlichen Dispergieren von feinteiligen Feststoffen in einer Flüssigkeit mittels einem Mischaggregat, wobei ein konstanter Flüssigkeitsstrom dem Mischaggregat zugeführt wird und die feinteiligen Feststoffe mittels einer Schnecke unter Verdichtung dem Mischaggregat zugeführt werden, die Dosierung der Feststoffe durch Regelung der Fördergeschwindigkeit der Schnecke in Abhängigkeit des im Mischaggregat herrschenden Druckes geregelt wird und die Feststoffe vor ihrer Einleitung in das Mischaggregat entgast werden, dadurch gekennzeichnet, daß der Schnecke ein Vakuumzwischensilo vorgeschaltet wird, aus dem die Schnecke fördert, und im Zwischensilo die Füllstandshöhe im wesentlichen konstant gehalten wird.

2. Verfahren nach Anspruch 1, dadurch gekennzeichnet, daß die Füllstandshöhe der Schnecke im Zwischensilo mit feinteiligen Feststoffen mindestens das 2- bis 3-fache des Schneckendurchmessers beträgt.

3. Vorrichtung zur kontinuierlichen Dispergierung von feinteiligen Feststoffen in einer Flüssigkeit im Durchlaufverfahren, wobei die feinteiligen Feststoffe vor der Dispergierung entgast werden, enthaltend
ein Mischaggregat,
Mittel zur Zuführung eines konstanten Flüssigkeitsstromes zum Mischaggreagat,
ein Zwischensilo für die feinteiligen Feststoffe,
Mittel zur Aufrechterhaltung eines Unterdruckes im Zwischensilo, eine Schnecke zur Förderung der feinteiligen Feststoffe aus dem Zwischensilo in das Mischaggregat,
Mittel zur Druckmessung in dem Mischaggregat,
Mittel zur Steuerung der Förderleistung der Schnecke in Abhängigkeit von dem Druck im Mischaggregat,
Mittel zur Förderung von feinteiligem Feststoff in das Zwischensilo, sowie Mittel zur Regelung der Feststoffzufuhr zum Zwischensilo in Abhängigkeit von einem vorgegebenen Soll-Füllstand des Zwischensilos.

4. Vorrichtung nach Anspruch 3, dadurch gekennzeichnet, daß das Mittel zur Förderung von feinteiligem Feststoff in das Zwischensilo eine Förderschnecke ist.

5. Vorrichtung nach Anspruch 3, dadurch gekennzeichnet, daß das Mittel zur Förderung von feinteiligem Feststoff in das Zwischensilo eine Zellradschleuse ist.

## Claims

1. A method of continuously dispersing finely divided solids in a liquid by means of a mixing unit, wherein a constant flow of liquid is fed to the mixing unit and the finely divided solids are fed with compaction to the mixing unit by means of a screw, metering of the solids is regulated by regulating the conveying speed of the screw as a function of the pressure prevailing in the mixing unit and the solids are degassed prior to introduction thereof into the mixing unit, characterised in that an intermediate vacuum silo is connected upstream of the screw, from which intermediate silo the screw is supplied and in which the filling level is kept substantially constant.

2. A method according to claim 1, characterised in that the level to which the screw is filled with finely divided solids in the intermediate silo amounts to at least 2 to 3 times the screw diameter.

3. A device for continuously dispersing finely divided solids in a liquid using a continuous method, wherein the finely divided solids are degassed prior to dispersion, said device comprising
a mixing unit
means for supplying a constant flow of liquid to the mixing unit,
an intermediate silo for the finely divided solids,
means for maintaining a vacuum in the intermediate silo,
a screw for conveying the finely divided solids from the intermediate silo into the mixing unit,
means for measuring pressure in the mixing unit,
means for controlling the volume delivered by the screw as a function of the pressure in the mixing unit,
means for conveying finely divided solids into the intermediate silo, and
means for regulating the supply of solids to the intermediate silo as a function of a preset desired intermediate silo filling level.

4. A device according to claim 3, characterised in that the means for conveying finely divided solids into the intermediate silo is a conveying screw.

5. A device according to claim 3, characterised in that the means for conveying finely divided solids into the intermediate silo is a rotary-vane feeder.

## Revendications

1. Procédé pour la dispersion continue de matières solides en fines particules dans un liquide à l'aide d'un appareil de mélange, dans lequel on envoie un courant de liquide constant à l'appareil de mélange et on envoie également à l'appareil de mélange les matières solides en fines particules à l'aide d'une vis, avec compression, on règle le dosage des matières solides par réglage de la vitesse de transport de la vis en fonction de la pression régnant dans l'appareil de mélange et on dégaze les matières solides avant leur introduction dans l'appareil de mélange, ce procédé se caractérisant en ce que la vis est précédée d'un silo intermédiaire sous vide d'où elle emporte la matière et la hauteur de niveau dans le silo intermédiaire est maintenue essentiellement constante.

2. Procédé selon la revendication 1, caractérisé en ce que la hauteur de niveau des matières solides en fines particules sur la vis dans le silo intermédiaire représente au moins 2 à 3 fois le diamètre de la vis.

3. Appareillage pour la dispersion continue de matières solides en fines particules dans un liquide par passage continu dans lequel les matières solides en fines particules sont dégazées avant la dispersion, cet appareillage comprenant
un appareil de mélange,
des dispositifs permettant d'envoyer un courant de liquide constant vers l'appareil de mélange,
un silo intermédiaire pour les matières solides en fines particules,
des dispositifs permettant de maintenir un vide dans le silo intermédiaire,
une vis servant à transporter les matières solides en fines particules du silo intermédiaire vers l'appareil de mélange,
des dispositifs permettant de mesurer la pression dans l'appareil de mélange,
des dispositifs permettant d'agir sur la capacité de transport de la vis en fonction de la pression dans l'appareil de mélange,
des dispositifs permettant de transporter la matière solide en fines particules dans le silo intermédiaire et
des dispositifs permettant de régler l'alimentation en matières solides du silo intermédiaire en fonction d'un niveau déterminé dans ce silo.

4. Appareillage selon la revendication 3, caractérisé en ce que le dispositif servant à alimenter le silo intermédiaire en la matière solide en fines particules est une vis transporteuse.

5. Appareillage selon la revendication 3, caractérisé en ce que le dispositif servant à alimenter le silo intermédiaire en la matière solide en fines particules est une écluse à roue cellulaire.
